# EUROPEAN PATENT APPLICATION

(11) **EP 4 817 959 A1**
(43) Date of publication of application: **07.10.2026**
(21) Application number: 26158654.9
(22) Date of filing: 13.02.2026
(51) Int. Cl.: B60R 11/04, B01J 29/10, B60H 3/06, B60R 11/00, B60S 1/02

(54) **SYSTEM TO PREVENT CAMERA OBSTRUCTION USING VOC ABSORBERS**

(30) Priority: 14.02.2025 US 202563758513 P
(71) Applicant: Tesla, Inc., Austin, TX 78725 (US)
(72) Inventor: OSWALD, Matthew Joesph, Austin, Texas, 78725 (US); ROCCHIO, Matthew Robert, Austin, Texas, 78725 (US); MOSHE, Amir, Austin, Texas, 78725 (US); MODI, Harsh Bhupat, Austin, Texas, 78725 (US); NOEL, Derek Matthew, Austin, Texas, 78725 (US)
(74) Representative: Bryn-Jacobsen, Caelia

(57) **Abstract**

A system for preventing camera obstruction in vehicles includes sensors (108, 110) mounted in optical communication with a windshield (104) and plastic components (106) containing integrated microporous, crystalline aluminosilicate particles positioned proximate to the sensors (108, 110). In certain examples, the plastic components (106) comprise polypropylene resin material having approximately 70% by weight microporous, crystalline aluminosilicate particles with crystalline structures and controlled pore sizes configured to trap volatile organic compounds (VOCs) and semi-volatile organic compounds (SVOCs). The components (106) include glare shields, mounting brackets, interior trim components, and lens hoods strategically positioned to absorb VOCs before they can condense on the windshield (104).

## Description

### TECHNICAL FIELD

The technical field relates to systems and methods for maintaining optimal visibility and performance of vehicle safety systems, particularly those utilizing optical sensors and cameras mounted in vehicles. More broadly, this field encompasses technologies for managing environmental conditions that may affect the operation of vehicle sensing systems and safety features.

### BACKGROUND

Modem vehicles increasingly rely on sophisticated safety and driver assistance systems that utilize cameras and optical sensors mounted within the vehicle cabin. These advanced systems, including automatic emergency braking and autonomous driving capabilities, depend on clear, unobstructed visibility through the vehicle's windshield to function properly and ensure passenger safety.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.

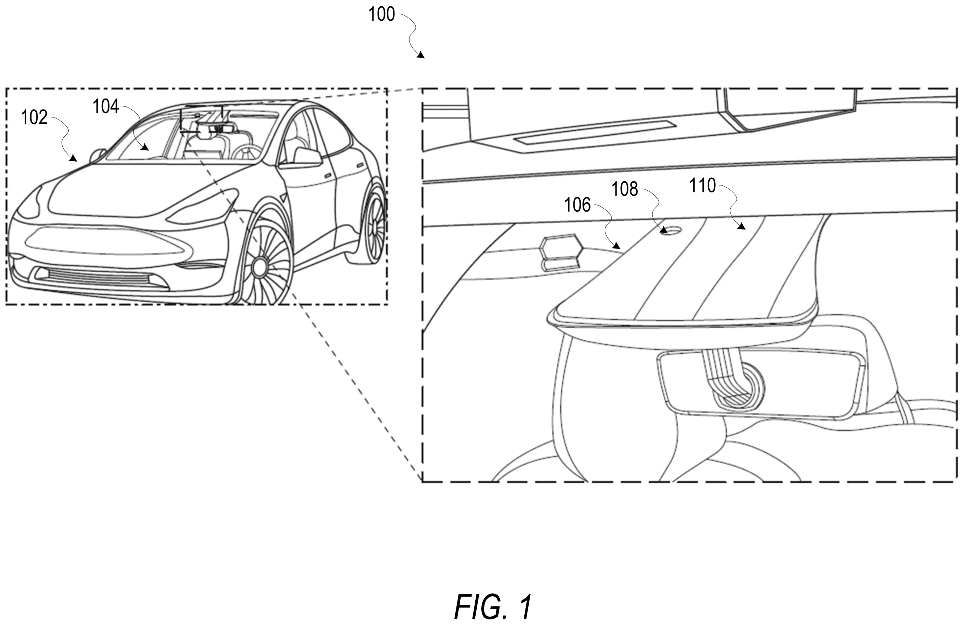

FIG. 1 illustrates a vehicle windshield having an interior surface, with one or more cameras mounted behind the windshield in optical communication with the windshield exterior, according to certain examples.

### DETAILED DESCRIPTION

Modem vehicles increasingly rely on sophisticated safety and driver assistance systems that utilize cameras and optical sensors mounted within the vehicle cabin. These advanced systems, including automatic emergency braking and autonomous driving capabilities, depend on clear, unobstructed visibility through the vehicle's windshield to function properly and ensure passenger safety.

A significant challenge arises from volatile organic compounds (VOCs) and semi-volatile organic compounds (SVOCs) that are released from various polymeric materials used in vehicle interiors, including plastics, adhesives, and synthetic materials used in seats, dashboards, and trim pieces. These compounds can condense on the interior surface of the windshield, particularly in areas where cameras are mounted, potentially obscuring their view and impacting the performance of critical safety systems.

According to certain examples, systems and methods for preventing camera obstruction in vehicles by utilizing plastic components with integrated microporous, crystalline aluminosilicate particles positioned proximate to vehicle-mounted cameras are described herein. The system includes one or more sensors mounted in communication with a vehicle windshield, with the sensors comprising optical and infrared detection devices, including cameras, that are configured to provide input for vehicle safety features including automatic emergency braking and autonomous driving capabilities.

In some examples, the system incorporates multiple plastic components positioned proximate to the cameras, manufactured from polypropylene resin having microporous, crystalline aluminosilicate particles that have a well-defined tetrahedral framework that may be composed of silicon (Si), aluminum (Al), and oxygen (O) atoms that create uniform pores at channels at the molecular scale integrated therein. In some examples, these microporous, crystalline aluminosilicate particles comprise approximately 70% by weight of the resin material and include crystalline structures with controlled pore sizes specifically designed to trap VOC molecular chains. The plastic components may include a glare shield configured to block reflections, a bracket designed for mounting the camera to the windshield, interior trim components, and a lens hood configured to block stray light from entering camera optics. In some examples, the microporous, crystalline aluminosilicate particles have pore sizes ranging from approximately 3 to 10 Angstroms (0.3 to 1.0 nanometers). In certain examples, medium pore zeolites having pore sizes of approximately 5 to 7 Angstroms may be used. In other examples, large pore zeolites having pore sizes of approximately 7 to 10 Angstroms may be selected to capture larger VOC molecules and semi-volatile organic compounds.

In some examples, the manufacturing process includes combining microporous, crystalline aluminosilicate particles with plastic resin pellets, mixing to achieve the desired microporous, crystalline aluminosilicate content, and molding the mixture into various component shapes. The microporous, crystalline aluminosilicate particles maintain their effectiveness when integrated into the polypropylene resin material, demonstrating superior performance compared to other VOC absorbing materials such as activated charcoal and bentonite clay.

In some examples the system integrates with various vehicle safety features and is designed to simultaneously control both moisture and VOCs within the vehicle interior, prevent condensation on the windshield in regions corresponding to camera fields of view, and maintain optimal image quality for vehicle safety systems. In certain examples, the crystalline structures have pore sizes ranging from approximately 3 to 10 Angstroms, specifically selected to attract and trap long chain fatty acids and other VOC compounds commonly found in vehicle interiors. The pore size selection may depend on the target VOC molecules, with larger pores (7-10 Angstroms) being particularly effective for semi-volatile compounds.

**FIG. 1** illustrates a vehicle 102 having a windshield 104. Detail region 100 shows a sensor housing 106 positioned behind an interior surface of windshield 104. Sensor housing 106 contains one or more camera/sensor devices 108, 110. Camera/sensor devices 108, 110 may be positioned to provide input for vehicle safety features including automatic emergency braking and advanced driver assistance capabilities. Camera/sensor devices 108, 110 are mounted in optical communication with windshield 104 to maintain fields of view through the glass.

As seen in FIG. 1, areas of VOC condensation may be visible on the interior surface of windshield 104. Volatile organic compounds (VOCs) released from vehicle interior components can accumulate on the interior surface of windshield 104. The VOC condensation may be visible when viewed from outside vehicle 102, appearing as a haze or film on windshield 104. When VOC condensation occurs in regions corresponding to the fields of view of camera/sensor devices 108, 110, the condensation may obstruct or degrade image quality captured by camera/sensor devices 108, 110.

To address VOC condensation, one or more plastic components containing integrated VOC-absorbing material are mounted proximate to camera/sensor devices 108, 110 within or adjacent to sensor housing 106. The VOC-absorbing material may comprise microporous, crystalline aluminosilicate particles. According to certain examples, the plastic components may include one or more of: a glare shield configured to block reflections and sun glare from entering camera/sensor devices 108, 110; a mounting bracket adhesively attached to windshield 104, the mounting bracket serving as a mounting structure to which camera/sensor devices 108, 110 and other components are secured; interior trim components positioned adjacent to sensor housing 106; or lens hoods configured to block stray light from entering optics of camera/sensor devices 108, 110.

In some examples, the plastic components are manufactured by combining microporous, crystalline aluminosilicate particles with a polymer resin. The polymer resin may comprise polypropylene. The microporous, crystalline aluminosilicate particles may comprise approximately 70% by weight of the final material. Other weight percentages are contemplated, including ranges from approximately 50% to approximately 80% by weight. The microporous, crystalline aluminosilicate particles may comprise zeolite materials. The zeolite materials may have controlled pore sizes selected to attract and trap VOC molecules, including long chain fatty acids and semi-volatile organic compounds (SVOCs), before the VOC molecules can migrate to and condense on the interior surface of windshield 104.

In some examples, sensor housing 106 is positioned proximate to a rearview mirror mounting region of windshield 104. Sensor housing 106 may be attached to windshield 104 via an adhesive bond. The plastic components containing VOC-absorbing material may be positioned within an interior volume defined by sensor housing 106, such that VOCs released within the vehicle interior are absorbed before reaching the interior surface of windshield 104 in the region corresponding to camera/sensor devices 108, 110.

In some examples, the VOC-absorbing material is distributed throughout the plastic component matrix rather than applied as a surface coating. This distribution allows the plastic component to absorb VOCs over an extended period as the microporous, crystalline aluminosilicate particles throughout the component volume remain available for absorption.

### EXAMPLES

Example 1: A system that comprises a windshield of a vehicle having an interior surface, one or more sensors mounted in optical communication with the windshield, and a plurality of plastic components positioned proximate to the one or more sensors, wherein the plastic components comprise a resin material having microporous, crystalline aluminosilicate particles integrated therein.

Example 2: The subject matter of Example 1, wherein the plastic components include at least one of: a glare shield, a bracket to mount to the windshield, an interior trim component, and a lens hood associated with the one or more sensors.

Example 3: The subject matter of Examples 1-2, wherein the one or more sensors comprise cameras configured to provide input for vehicle safety features.

Example 4: The subject matter of Examples 1-3, wherein the vehicle safety features include automatic emergency braking and Full Self Driving (FSD) capabilities.

Example 5: The subject matter of Examples 1-4, wherein the microporous, crystalline aluminosilicate particles comprise approximately 70% by weight of the resin material.

Example 6: The subject matter of Examples 1-5, wherein the microporous, crystalline aluminosilicate particles include crystalline structures having controlled pore sizes to trap specific VOC molecular chains.

Example 7: A system for preventing camera obstruction in a vehicle comprises a windshield having an interior surface, at least one camera mounted in optical communication with the windshield and configured to provide input for vehicle safety features, and a plurality of plastic components positioned proximate to the camera, wherein the plastic components comprise polypropylene resin material having microporous, crystalline aluminosilicate particles integrated therein, the microporous, crystalline aluminosilicate particles comprise crystalline structures with controlled pore sizes configured to trap specific VOC molecular chains.

Example 8: The subject matter of Example 7, wherein the plastic components comprise one or more of: a glare shield of the at least one camera, a bracket of the at least one camera, an interior trim component, and a lens hood of the at least one camera.

Example 9: The subject matter of Examples 7-8, wherein the microporous, crystalline aluminosilicate particles comprise 70% by weight of the polypropylene resin material.

Example 10: The subject matter of Examples 7-9, wherein the controlled pore sizes of the crystalline structures are specifically selected to attract and trap long chain fatty acids.

Example 11: The subject matter of Examples 7-10, wherein the vehicle safety features include one or more of: an automatic emergency braking system and Full Self Driving (FSD) system.

## Claims

1. A system comprising:
a windshield of a vehicle;
one or more sensors mounted in optical communication with the windshield; and
a plastic component positioned proximate to the one or more sensors, wherein the plastic components comprise a resin material having microporous, crystalline aluminosilicate particles integrated therein.

2. The system of claim 1, wherein the plastic components include at least one of:
a glare shield;
a bracket to mount to the windshield;
an interior trim component; or
a lens hood associated with the one or more sensors.

3. The system of claim 1 or 2, wherein the one or more sensors comprise a camera configured to provide input for vehicle safety features.

4. The system of claim 3, wherein the vehicle safety features include automatic emergency braking or autonomous driving capabilities.

5. The system of any one of the preceding claims, wherein the microporous, crystalline aluminosilicate particles comprise approximately at least 70% by weight of the resin material.

6. The system of any one of claims 1-4, wherein the microporous, crystalline aluminosilicate particles include crystalline structures defining controlled pores sized to trap VOC molecular chains.

7. A system for preventing camera obstruction in a vehicle, comprising:
a windshield;
at least one camera mounted in optical communication with the windshield and configured to provide input for vehicle safety features; and
a plurality of plastic components positioned proximate to the camera, wherein the plastic components comprise polypropylene resin material having microporous, crystalline aluminosilicate particles integrated therein, the microporous, crystalline aluminosilicate particles comprise crystalline structures with controlled pore sizes configured to trap specific VOC molecular chains.

8. The system of claim 7, wherein the plastic components comprise one or more of:
a glare shield of the at least one camera;
a bracket of the at least one camera;
an interior trim component; or
a lens hood of the at least one camera.

9. The system of claim 7 or 8, wherein the microporous, crystalline aluminosilicate particles comprise 70% by weight of the polypropylene resin material.

10. The system of any one of claims 7-9, wherein the controlled pore sizes of the crystalline structures are specifically selected to attract and trap long chain fatty acids.

11. The system of any one of claims 7-10, wherein the vehicle safety features include one or more of:
an automatic emergency braking system; or
an autonomous driving system.
